(19) **Europäisches Patentamt**

**European Patent Office**

**Office européen des brevets**

(11) **EP 1 136 528 A2**

(12) **EUROPÄISCHE PATENTANMELDUNG**

(43) Veröffentlichungstag:
26.09.2001 Patentblatt 2001/39

(51) Int Cl.[7]: **C09D 5/08**

(21) Anmeldenummer: **01105968.0**

(22) Anmeldetag: **10.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **18.03.2000 DE 10013471**

(71) Anmelder: **DaimlerChrysler AG**
**70567 Stuttgart (DE)**

(72) Erfinder: **Schmidt, Christina, Dr.**
**57080 Siegen (DE)**

(54) **Anti-Korrosionsschicht**

(57) Aufgabe der Erfindung ist es eine Anti-Korrosionsschicht für Bleche zu schaffen, die auch bei längeren Standzeiten in Luft und feuchter Atmosphäre korrosionshemmende Eigenschaften aufweist.

Diese Aufgabe wird erfindungsgemäß dadurch gelöst, daß der Füllstoff zumindest teilweise aus Silizium besteht.

Die Erfindung findet Anwendung in Anti-Korrosionsschichten mit einem Anteil von etwa 10 bis 80 Gew-% Füllstoff.

**Beschreibung**

Die Erfindung betrifft eine Anti-Korrosionsschicht gemäß dem Oberbegriff des Patentanspruchs 1. Eine solche Anti-Korrosionsschicht ist aus der vorangemeldeten, nachveröffentlichten DE 19903400 bekannt.

Die Beschichtung von metallischen Oberflächen stellt bezüglich des damit angestrebten Korrosionsschutzes hohe Anforderungen; insbesondere hinsichtlich der Beständigkeit solcher Schutzwirkungen bei stark wechselnden Umgebungsbeanspruchungen, wie sie bei Fahrzeugen aller Art auftreten.

Es ist bei Stahlblechen bekannt, an diesen eine Verzinkung vorzunehmen und die so verzinkten Bleche mit einer organischen Beschichtung zu überziehen (DE-OS 19700319). Jedoch hat sich gezeigt, daß unter den Betriebsbedingungen für Fahrzeuge verzinkte Stahlbleche, die mit Phosphat- und/oder Chromatschichten sowie Lackschichten versehen wurden, für einen vollständigen und dauerhaften Korrosionsschutz nicht ausreichen.

Verzinkte Bleche können sogar als beschichtungsfeindlich bezeichnet werden, wenn Zinkstaubfarben oder grob gemahlene Zinkpartikel verwendet werden. Derartig verzinkte Bleche besitzen keinen sicheren kathodischen Korrosionsschutz, da derartige Zinkpartikel zu verhältnismäßig schneller Oxidation neigen und dadurch zu elektrischen Isolatoren werden. Die elektrische Leitfähigkeit in der Korrosionsschutzschicht wird dadurch so weit herabgesetzt, daß die insbesondere im Hinblick auf eine Unterrostung wichtige kathodische Schutzwirkung aufgehoben wird.

Das gleiche gilt für unverzinkte Bleche, bei denen man zur Verbesserung der Korrosionsbeständigkeit versucht hat organischen Beschichtungsmaterialien Füllstoffe beizumengen, die aus elektrisch leitenden Metallpartikeln bestehen, die ein negatives elektrisches Potential in Bezug zu dem Potential der Bleche aufweisen. Für Stahlbleche kommen hierfür beispielsweise Zink, Aluminium oder Magnesium in Frage. Auch in diesem Fall oxidieren die Metallpartikel und setzen die kathodische Schutzwirkung herab.

Der vorangehend beschriebene Abbau des kathodischen Schutzes über die Oxidation der Verzinkung oder der hinzugefügten Metallpartikeln in organischen Schutzschichten führt dazu, daß nach längeren Standzeiten in Luft und feuchter Atmosphäre der anfängliche Korrosionsschutz verhältnismäßig rasch nachläßt.

In der DE 19903400 werden Füllstoffe mit Hohlraumstruktur, z.B. Zeolithe, eingesetzt, die mit Inhibitoren und Antioxidantien beladen sind.

In DE 30 01 882 C2 ist ein Korrosionsinhibitor in Form von oxidischen Teilchen mit einer Größe von bis zu 10μm als Füller für eine Anti-Korrosionsschicht offenbart, an denen durch Ionenaustausch korrosionshemmende Anionen gebunden sind.

Die Abgabe der derart gebundenen Anionen läuft jedoch zu schnell ab, da reaktive Ionen, die durch die Schicht diffundieren, jedoch nicht gebunden werden sollen, die korrosionshemmenden Anionen an den frei zugänglichen Stellen auf den oxidischen Teilchen zu schnell binden. Nachteilig wirkt sich dies in einem zu schnellen Abklingen der korrosionshemmenden Eigenschaften der Schicht aus.

Aufgabe der Erfindung ist es eine Anti-Korrosionsschicht für Bleche anzugeben, die auch bei längeren Standzeiten in Luft und feuchter Atmosphäre korrosionshemmende Eigenschaften aufweist.

Diese Aufgabe wird erfindungsgemäß durch eine Anti-Korrosionsschicht, welche die Merkmale des Patentanspruchs 1 aufweist, gelöst. Weiterbildungen der Erfindung sind in den Unteransprüchen angegeben.

Erfindungsgemäß wird zur Beschichtung von Metalloberflächen, beispielsweise mit geeigneten organischen Polymeren, Silizium als Füllstoff hinzugefügt.

Ein Vorteil der erfindungsgemäßen Lösung besteht darin, daß bei einer umgebungsbedingten Permeation von Sauerstoff und Wasser durch die Polymerschicht das Silizium mit diesen zu korrosions-inhibierenden Silizium-Oxid-Verbindungen reagiert.

$$Si + 2OH^- + 2\,H_2O \rightarrow [H_2SiO_4]^{2-} + 2H_2\uparrow$$

$$Si + 2\,H_2O \rightarrow SiO_2 + 2H_2\uparrow$$

$$Si + O_2 \rightarrow SiO_2$$

Das bedeutet, Inhibitoren werden während der Standzeit in Luft und feuchter Atmosphäre nachgeliefert.

Der Anteil des Füllers in der erfindungsgemäßen Anti-Korrosionsschicht ist so bemessen, daß er über den Sauerstoff- und Wassereinfang einen ausreichenden Korrosionsschutz für die Blechsubstrate bietet. Er kann 10 bis 80 Gewichtsprozent betragen. Als Füllmaterial können zusätzlich Substanzen wie Zeolithe verwendet werden, die eine große Oberfläche in Form von Hohlraumstrukturen aufweisen. Geeignete Zeolith-Sorten sind ZSM5, H-Mordinit oder Alite 180.

In den Hohlraumstrukturen kann Sauerstoff und Wasser zumindest anteilig gebunden werden. Vorteilhaft ist auch die Verwendung hydrophober Zeolithe, da diese die Einlagerung und Diffusion von Wasser in die Beschichtung zusätzlich erschweren.

Die Hohlraumstrukturen sind aber auch gut zur Aufnahme und/oder Adsorption von zusätzlichen Inhibitoren und/oder Antioxidantien geeignet.

Auch die Zumischung von fein gemahlenen Zinkpartikeln weist Vorteile auf, da sie mit dem Silizium und dem Luftsauerstoff zu passiv wirkenden ZnSi-Oxid-Verbindungen reagieren.

Die adsorbierten Inhibitoren und/oder Antioxidantien weisen zusätzlich eine vorteilhafte Abfangwirkung auf den in die Polymerschicht eindiffundierten Sauerstoff auf und verringern somit eine Oxidation der Substratoberfläche, wodurch die Langzeitwirkung des Korrosionsschutzes verbessert wird.

Als geeignete Inhibitoren sind wahlweise Carbonsäuren, Amine, Ketone, Aldehyde und heterozyklische Verbindungen einsetzbar. Es können auch Phosphate, Benzoate, Silicate, Vanadate, Wolframate, Zirkonate, Borate oder Molybdate oder ähnliche Substanzen zugesetzt werden.

Zu den geeigneten Antioxidantien zählen Vitamin C oder dessen Salze oder Vitamin E oder aromatische Aldehyd-Verbindungen, (z.B. 1,2- oder 2,4-Dihydroxybenzaldehyd, oder Phthal-oder Terephthaldialdehyd oder Brenzkatechin) und ähnliche Substanzen, wie z.B. Amine, Zirkonate oder Benzotriazol die ihre oberflächenaktive Wirkung entfalten, nachdem sie mit Luftsauerstoff reagiert haben.

Die Korngröße des eingesetzten Füllers soll in Abhängigkeit von der gewünschten Schichtdicke der Anti-Korrosionsschicht zwischen 0 und circa 50 µm betragen. Die vorgenannten Füllermaterialien sind in diesen Korngrößen durch Aufmahlen herstellbar.

Für das Beladen des Füllermaterials mit Inhibitoren und/oder Antioxidantien sind in Abhängigkeit vom Aggregatzustand dieser Substanzen verschiedene Verfahren möglich.

Liegen der Inhibitor und die Antioxidanz als Feststoff vor, so können sie in einem für die Substanzen geeigneten, Lösungsmittel gelöst und mit dem trockenen Füllermaterial bei Raumtemperatur verrührt werden. Dazu stehen dem Fachmann für die Lösung der Inhibitoren und Antioxidantien bekannte, geeignete Lösungsmittel zur Verfügung.

Flüssige Inhibitoren und Antioxidantien können über eine mit dem gewählten, getrockneten Füllermaterial gefüllte Säule gegeben werden, in der das Beladen des Füllermaterials mit den Substanzen nach dem bekannten Prinzip der Säulenchromatographie erfolgt.

Weiterhin besteht die Möglichkeit feste oder flüssige Beladungssubstanzen in die Gasphase zu überführen und über eine Säule zu geben, die mit dem gewählten getrockneten Füllermaterial gefüllt ist. Das Beladen des Füllermaterials mit den Substanzen erfolgt in diesem Verfahren nach dem bekannten Prinzip der Gaschromatographie.

Nachstehend sind einige ausgewählte Ausführungsbeispiele für die erfindungsgemäße Anti-Korrosionsschicht näher beschrieben.

| Rohstoff | Anteil (Gew.-%) |
| --- | --- |
| 1. Polyurethan-Acrylat (Viatkin VTE 6171/55MPFA) | 50 - 80 |
| 2. Reaktivverdünner (Hexandioldiacrylat HDDA) | 5 - 30 |
| 3. Photoinitiator (Darocur 1173) | 1 - 10 |
| 4. Additiv (Additol) | 1 - 10 |
| 5. Butylacetat | 5 - 10 |
| 6. Silizium | 10 - 80 |
| 7. Zeolith | 4 - 80 |

Die ersten fünf Substanzen werden in der angegebenen Reihenfolge miteinander verrührt. Silizium und Zeolith - mit einem gemeinsamen Rezepturanteil von max. 80 Gew.% - werden mit einem geringen Anteil Lösungsmittel zu einer Paste verarbeitet, die anschließend der Mischung der ersten fünf Substanzen zugesetzt wird. Die Applikation auf metallischen Substraten erfolgt durch Rakeln. Zur Härtung wird die Beschichtung bei 40° C für circa 10 abgelüftet und dann mit 80W/cm für circa 30 Sekunden UV-bestrahlt.

Gute Eignung als Anti-Korrosionsschicht zeigt insbesondere die nachfolgend aufgeführte Zusammensetzung:

| Rohstoff | Anteil (Gew.%) |
| --- | --- |
| 1. Silizium | 9,5 |
| 2. Zeolith | 4,0 |
| 3. Methoxypropanol | 5,5 |
| 4. Butylglykol (Lösungsmittel) | 27 |

(fortgesetzt)

| Rohstoff | Anteil (Gew.%) |
|---|---|
| 5. Epoxidharz | 1,2 |
| 6. Butylglykol (Lösungsmittel) | 41 |
| 7. Rheologisches Hilfsmittel | 0,5 |
| 8. Benetzungsmittel | 0,5 |
| 9. Phenolharz | 0,75 |
| 10. $H_3PO_4$ (Katalysator) | 0,5 |

Bei dieser Zusammensetzung werden zunächst die Rohstoffe 1 bis 4 und 5 bis 9 vermischt, danach werden die beiden Mischungen zusammengeführt. Zuletzt erfolgt die Zugabe des Katalysators $H_3PO_4$.
Silizium erweist sich insbesondere als geeignet zur Verbesserung des Korrosionsschutzes von Phenolharz- und Phenol-Epoxidharzsystemen.

**Patentansprüche**

1. Anti-Korrosionsschicht mit einem Anteil von etwa 10 bis 80 Gew-% Füllstoff, der zumindest teilweise aus Silizium besteht, **dadurch gekennzeichnet, daß** der Füllstoff zusätzlich Zeolith aufweist.

2. Anti-Korrosionsschicht nach Anspruch 1, **dadurch gekennzeichnet, daß** sie Zeolith der Sorten ZSM5 und/oder H-Mordinit und/oder Alite 180 aufweist.

3. Anti-Korrosionsschicht nach Anspruch 1 oder 2, **dadurch gekennzeichnet, daß** sie zusätzliche Inhibitoren und/oder Antioxidantien aufweist, die vorzugsweise an den Füllstoffen adsorbiert sind.

4. Anti-Korrosionsschicht nach Anspruch 3, **dadurch gekennzeichnet, daß** als Inhibitoren wahlweise Phosphate, Benzoate, Silicate, Vanadate, Wolframate, Zirkonate, Borate oder Molybdate zugesetzt sind.

5. Anti-Korrosionsschicht nach einem der Ansprüche3 oder 4, **dadurch gekennzeichnet, daß** als Antioxidantien wahlweise Vitamin C oder dessen Salze, oder Vitamin E oder aromatische Aldehyd-Verbindungen zugesetzt sind.

6. Anti-Korrosionsschicht nach einem der Ansprüche 1 bis 5, **dadurch gekennzeichnet, daß** die Korngröße des Füllstoffmaterials in Abhängigkeit von der gewünschten Schichtdicke der Anti-Korrosionsschicht zwischen 0 und circa 50 μm beträgt.

7. Anti-Korrosionsschicht nach einem der Ansprüche 1 bis 6, **dadurch gekennzeichnet, daß** der Beladungsvorgang der Füllstoffe über ein Verrühren von gelösten Füllstoffen und gelösten Beladungssubstanzen oder bei flüssigen Beladungssubstanzen und festen Füllstoffen nach dem Prinzip der Säulenchromatographie oder bei gasförmigen Beladungssubstanzen und festen Füllstoffen nach dem Prinzip der Gaschromatographie erfolgt.